Europäisches Patentamt

European Patent Office

Office européen des brevets

(11) Publication number: **0 133 231**
**B1**

(12) EUROPEAN PATENT SPECIFICATION

(45) Date of publication of patent specification: **09.05.90**

(21) Application number: **84108156.5**

(22) Date of filing: **11.07.84**

(51) Int. Cl.⁵: **F 16 B 12/40,** A 47 B 13/02,
A 47 B 96/14

(54) **Assembly structure particularly for tables, trolleys, shelves, and other furnishing equipment.**

(30) Priority: **15.07.83 IT 1472883 u**

(43) Date of publication of application:
**20.02.85 Bulletin 85/08**

(45) Publication of the grant of the patent:
**09.05.90 Bulletin 90/19**

(84) Designated Contracting States:
**AT BE CH DE FR GB LI NL**

(56) References cited:
**EP-A-0 041 855**
**FR-A-1 104 506**
**FR-A-1 373 271**

(73) Proprietor: **Guerra, Masiero**
**Via della Resistenza, 10/A**
**Forlimpopoli Forli (IT)**

(72) Inventor: **Guerra, Masiero**
**Via della Resistenza, 10/A**
**Forlimpopoli Forli (IT)**

(74) Representative: **Modiano, Guido et al**
**MODIANO, JOSIF, PISANTY & STAUB Modiano**
**& Associati Via Meravigli, 16**
**I-20123 Milano (IT)**

Courier Press, Leamington Spa, England.

## Description

This invention relates to an assembly structure particularly for tables, trolleys, shelves, and other furnishing equipment.

Known are joints for erecting assembly structures which comprise, as a rule, elements with formed therein seats for a vertical upright and seats for horizontal crosspieces, as well as connection elements, thereby facilitating any space requirements of the user.

Such prior joints are not, however, devoid of disadvantages; in fact, it is not unusual for a joint to come loose from the upright and make the whole structure unstable.

An assembly structure of the type defined in the preamble of Claim 1 is described in FR—A—1 104 506, where only one seat is intended for insertion of vertical uprights and the other two seats are provided for the vertical portions of U-shaped crosspieces. Here, in order to lock the vertical portions in the seats, clamping means are provided which render the structure cumbersome, in particular they require use of rigid material for the assembly structure to resist the required high locking forces.

The task of the present invention is therefore to avoid the above drawbacks, by providing a structure which, besides having improved stability, increased durability and requiring easier assembling, may be made of plastics and have a monolithic form, thus being also economical to manufacture and presenting good aesthetic features.

This task is attained by a structure as defined in appended Claim 1.

The features and advantages of the invention will be more clearly understood from the following detailed description with reference to the accompanying illustrative drawings, where:

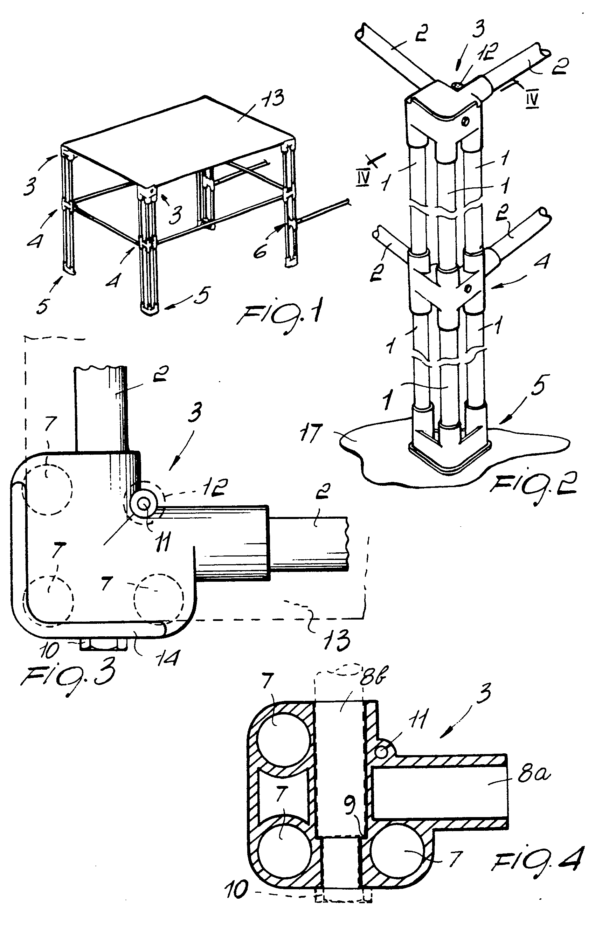

Figure 1 is a perspective view of a table assembled with a structure according to the invention;

Figure 2 is a perspective detail view of Figure 1;

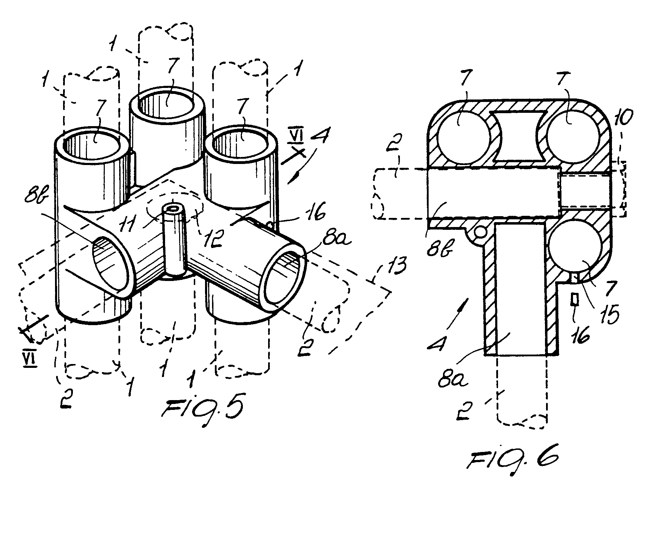

Figure 3 is a plan view of an upper terminal joint with the structure of this invention;

Figure 4 is a sectional view of Figure 2 taken along the line IV—IV, with only the upper terminal joint being shown therein;

Figure 5 is a perspective view of an intermediate joint with the structure according to the invention; and

Figure 6 is a sectional view of Figure 5, taken along the line VI—VI.

With reference to the drawing views, an assembly structure according to the invention comprises connection and rest elements which interconnect uprights 1 and horizontal crosspieces 2.

The connection and rest elements according to the invention include: upper terminal joints and intermediate joints, generally designated with the reference numerals 3 and 4, which may be used in combination with lower terminal joints 5 and hook-up joints 6, which however are not objects of the present invention.

The upper terminal joints 3 and the intermediate joints 4 are each provided with three cylindrical seats 7 which have mutually parallel axes and intended to accommodate three uprights 1 in a force fit relationship.

The three cylindrical seats 7 are arranged such that the projections of their axes onto a plane lying perpendicularly thereto would define the vertices of a right angled triangle, and precisely, the vertices of an isosceles right angled triangle.

Each of the upper terminal joints 3 and intermediate joints 4 has a pair of connection holes 8a and 8b, which extend along mutually perpendicular axes on a plane which is substantially perpendicular to the axes of the cylindrical seats 7.

Two horizontal crosspieces fit in these connection holes 8a and 8b, and whereas the connection hole 8a is a blind hole, the connection hole 8b is a throughgoing hole and is formed with a narrowing to provide an abutment 9 for securing a respective horizontal crosspiece as by means of a nut 10 or other equivalent element.

Each of such connection and rest elements is also formed, at a peripheral portion thereof and on its side facing inwardly of the structure, with a cylindrical housing 11 which extends along a substantially parallel axis to the axes of the cylindrical seats 7. This cylindrical housing is intended to accommodate a suction cup 12 or a screw therein, depending on whether the structure decks 13 are glass or wood panels.

Advantageously, each of the upper terminal joints 3 is provided, along one portion of its periphery, with a raised border 14 which surrounds and protects the corresponding corner edge of the deck 13.

Expediently, each of the intermediate joints 4 has at least one fastening hole 15 which extends perpendicularly to the lateral surface of the cylindrical seats 7 wherein a set screw 16 is inserted to ensure a tight interior connection of the intermediate joint 4 to at least one of the vertical uprights whereto it is attached.

Of course, the cylindrical seats 7 for the upper terminal joints 3 are made blind, whereas the cylindrical seats for the intermediate joints are throughgoing ones.

It has been found that, in actual practice, the structure of this invention gives improved rigidity and stability over prior assembly structures, owing to the single vertical upright having been replaced with a ternary of vertical uprights.

The connection and rest elements of this invention are also economical to manufacture because they are generally formed by injection moulding from a thermoplastic material.

Moreover, optimum protection and attachment can be provided for the horizontal decks.

To further improve the rigidity of the assembly as a whole, it would also be possible to use, during the assembling stage, cements or set screws to prevent the vertical uprights or horizontal crosspieces from sliding off the connection and rest elements.

In practicing the invention, any materials or dimensions, may be selected and used, contingent on individual requirements and the state of the art.

## Claims

1. A structure for assembling tables, trolleys and shelves comprising a connection element (3, 4), three cylindrical seats (7) formed in said element according to the vertices of a right-angled triangle and having parallel axes to one another, said seats being adapted to receive vertical uprights (1) force fitted therein, characterized in that said element (3, 4) further comprises a pair of mutually perpendicular holes (8a, 8b) adapted to receive the ends of horizontal crosspieces (2) fitted therein and connecting said vertical uprights (1), said holes (8a, 8b) having their axes perpendicular to the axes of said seats.

2. A structure according to Claim 1, characterized in that one (8b) of said holes has a narrowing extending between a pair of said seats (7) and forming an abutment (9) for a respective horizontal crosspiece (2), said narrowing opening to the outside through said pair of seats for insertion of a nut (10) or equivalent element securing said crosspiece, and that the other one (8a) of said holes is a blind hole.

## Patentansprüche

1. Aufbau zur Montage für Tische, Wagen, Regale mit einem Verbindungselement (3, 4), drei in dem Element eingeformte zylindrische Sitze (7), die gemäß den Eckpunkten eines rechtwinkligen Dreiecks angeordnet sind und die parallele Achsen zueinander aufweisen, wobei die Sitze derart ausgebildet sind, daß sie vertikale Stützen (1) im Klemmsitz aufnehmen, dadurch gekennzeichnet, daß das Element (3, 4) weiterhin ein Paar zueinander senkrechter Öffnungen (8a, 8b) aufweist, die zur Aufnahme der Enden von horizontalen Querstützen (2) und zur Verbindung der vertikalen Stützen (1) geeignet sind, wobei die Achsen der Öffnungen (8a, 8b) rechtwinklig zu den Achsen der Sitze angeordnet sind.

2. Aufbau zur Montage nach Anspruch 1, dadurch gekennzeichnet, daß eine (8a) der Öffnungen eine sich zwischen einem Paar der Sitze (7) erstreckende und einen Anschlag (9) für eine jeweils horizontale Querstütze (2) bildende Einengung aufweist, daß sich die Einengung nach außen durch das Paar der Sitze zur Aufnahme einer Mutter (10) oder einem äquivalenten Mittel zur Sicherung der Querstütze öffnet, und daß die andere (8a) der Öffnungen ein Sackloch ist.

## Revendications

1. Structure pour assembler des tables, des chariots et des étagères, comprenant un élément de connexion (3, 4), trois sièges cylindriques (7) formés dans ledit élément aux sommets d'un triangle rectangle et à axes mutuellement parallèles, lesdits sièges étant adaptés à recevoir des montants verticaux (1) enfoncés à force à l'intérieur, caractérisé en ce que ledit élément (3, 4) comprend en outre une paire de trous (8a, 8b) mutuellement perpendiculaires adaptés à recevoir les extrémités de traverses horizontales enfoncées à l'intérieur et reliant lesdits montants verticaux (1), les axes desdits trous (8a, 8b) étant perpendiculaires aux axes desdits sièges.

2. Structure selon la revendication 1, caractérisée en ce que l'un (8b) desdits trous comprend une partie rétrécie s'étendant entre une paire desdits sièges (7) et formant une butée (9) pour une traverse horizontale respective (2), ladite partie rétrécie débouchant à l'extérieur entre ladite paire de sièges en vue de l'insertion d'un écrou ou élément équivalent (10) fixant ladite traverse, et en ce que l'autre (8a) desdits trous est un trou borgne.

Fig.1

Fig.2

Fig.3

Fig.4

Fig.5

Fig.6